Europäisches Patentamt

European Patent Office

Office européen des brevets

(19)

(11) **EP 1 511 320 A1**

(12) **EUROPEAN PATENT APPLICATION**

(43) Date of publication:
**02.03.2005  Bulletin 2005/09**

(51) Int Cl.⁷: **H04N 7/26**

(21) Application number: **03019872.5**

(22) Date of filing: **01.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **MATSUSHITA ELECTRIC INDUSTRIAL
CO., LTD.
Kadoma-shi, Osaka 571-8501 (JP)**

(72) Inventors:
• **Schlockermann, Martin
63322 Roedermark (DE)**

• **Wedi, Thomas
30177 Hannover (DE)**
• **Wittmann, Steffen
36119 Neuhof (DE)**
• **Kadono, Shinya
663-8113, Nishinomiya (JP)**

(74) Representative: **Grünecker, Kinkeldey,
Stockmair & Schwanhäusser Anwaltssozietät
Maximilianstrasse 58
80538 München (DE)**

(54) **Film grain encoding**

(57)    A method and apparatus for separately processing film grain information and video data is provided wherein only a smaller number of blocks of film grain data is encoded/decoded compared to the number of encoded/decoded blocks of video data. By adding an obtained block of film grain information at the decoder side to a plurality of decoded blocks of video data, an efficient and natural reproduction of film grain is enabled with low computational effort.

Fig. 3

EP 1 511 320 A1

**Description**

The present invention relates to the encoding and decoding of motion picture video data. Particularly, the present invention relates to a method and apparatus for encoding and decoding film grain information included in video data stemming from photographic motion picture films.

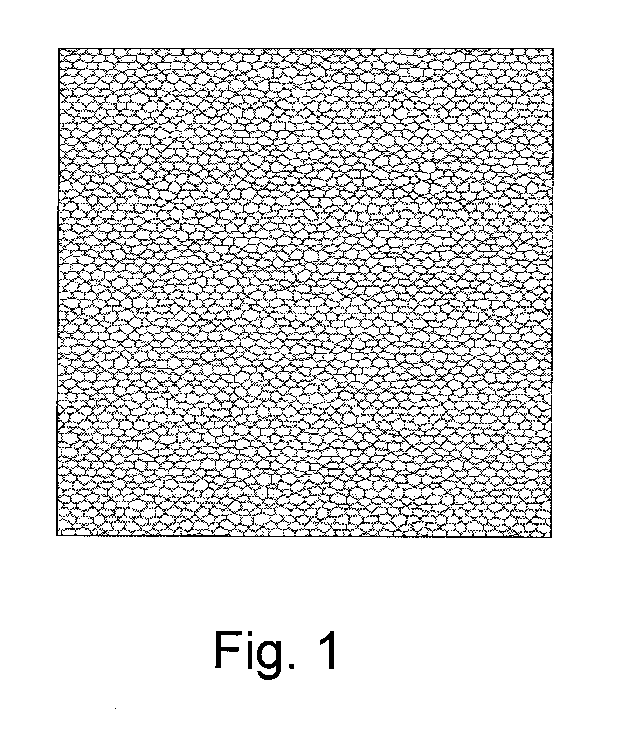

A motion picture film consists of silver-halide crystals which are dispersed within a photographic emulsion of the film. Each image recorded on the photographic film is generated by exposing and developing the silver-halide crystals. In colour images, the silver is chemically removed after development. However, the silver crystal structure remains after development in form of tiny grains of dye. Due to the random form of silver crystals in the emulsion, the grains are randomly formed and distributed within the image. An illustrative example of a grain structure is shown in Fig. 1. The perceivable grain structure is called film grain.

A viewer watching a motion picture reproduction does not recognise the individual grains which have a size of about 0.002 mm down to about a tenth of that size. However, the viewer will perceive groups of grains and identify same as film grain.

When enhancing a resolution of the produced image, the perception of film grain is likewise increased. Specifically, film grain is clearly noticeable in cinema reproductions and in high definition video images. On the other hand, film grain is of less importance for standard television images and even smaller television display formats.

Motion pictures are being adopted in an increasing number of applications, ranging from video telephony and video conference into DVD and Digital television. When motion pictures are being transmitted or recorded, a substantial amount of data has to be sent through conventional transmission channels of limited available frequency bandwidth or has to be stored on conventional storage media of limited data capacity. In order to transmit and store digital data on conventional channels/media, it is inevitable to compress or reduce the volume of digital data.

For the compressing of video data, a plurality of video coding standards has been developed. Such video standards are, for instance, ITU-T standards denoted with H.26x and ISO/IEC standards denoted with MPEG-x. The most up to date and advanced video coding standards currently the standard denoted as H.264 or denoted as MPEG-4 AVC.

The encoding approach underlying most of these standards consists of the following main stages. Firstly, a video frame is divided into blocks of pixels in order to subject each video frame to a data compression at a block level. Second, spatial redundancies within a video frame are reduced by applying each block of video data to a transform from the special domain into the frequency domain, by quantising the resulting transform coefficients, and by entropy encoding the quantised transform coefficients. Further, temporal dependencies between blocks of subsequent frames are exploited in order to only transmit changes between subsequent frames. This is accomplished by employing a motion estimation/compensation technique.

Among various video compression techniques, the so-called hybrid coding technique is known to be most effective. The hybrid coding technique combines temporal and spatial compression techniques together with statistical coding. Most hybrid techniques employ motion compensated Differential Pulse Code Modulation (DPCM), two-dimensional Discrete Coding Transform (DCT), quantisation of DCT coefficients, and Variable Length Coding (VLC). The motion compensated DPCM is a process of determining the movement of an image object between a current frame and a previous frame, and predicting the current frame according to the determined motion to produce differential signals representing the difference between the current frame and its prediction.

Although current video coding standards employ a plurality of different procedural steps in order to cope with different video contents, there does not yet exist any actual tool for appropriately encoding film grain information of a video sequence. Hence, an efficient coding of motion pictures recorded on photographic films is desirable.

One approach to overcome this drawback of existing video coding standards is to remove the film grain information from the video sequence, to parameterise the film grain information based predefined film grain models, and to transmit statistical film grain parameters to supplement the encoded video data. The film grain parameters can be transmitted in form of Supplemental Enhancement Information (SEI). The Supplemental Enhancement Information mode of current video coding standards includes additional information into the transmitted bit stream in order to offer display capabilities within the coding framework. The SEI information currently provides support for picture freeze, picture snapshots, video segmentation, progressive refinement and keying. These options are aimed at providing decoders with supporting features and functionalities within the bit stream.

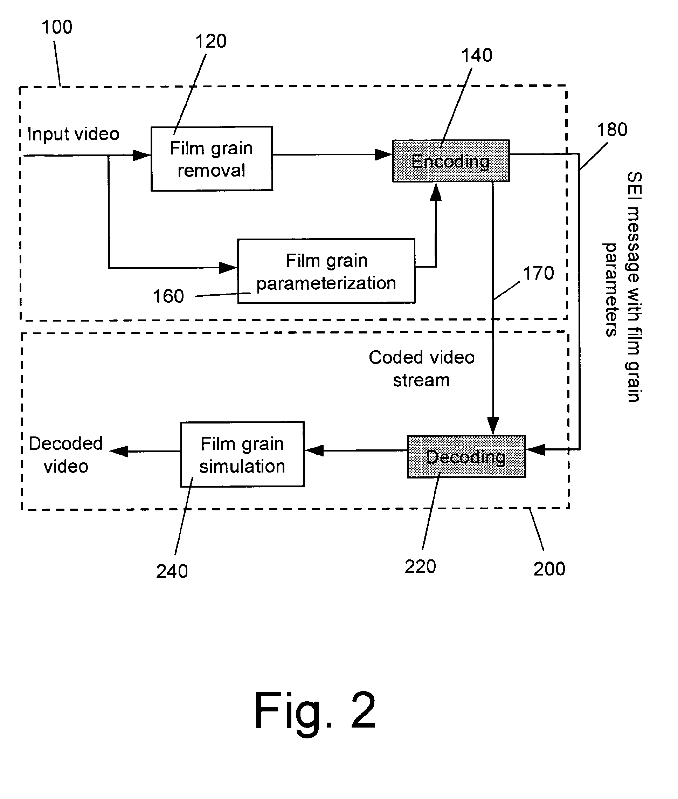

The approach of transmitting statistical parameters for the film grain information is illustrated in Fig. 2. A sequence of video data input to encoder 100 is applied to a film grain removal filter 120 for separating the video information from the film grain. The extracted video information is subjected to a standard video encoding process by video encoder 140. The encoded video data 170 are transmitted as a coded video stream to a corresponding decoder 200.

While the video information - without the film grain information - has been encoded in accordance with one of the existing video encoding standards, the film grain information is applied to a film grain parameterization unit 160 in order to parameterize the film grain in accordance with a statistical model thereof. The resulting film grain parameters are transmitted in form of an SEI message. The SEI message is included into the video bit stream.

The encoded video information 170 and the SEI message with film grain parameters 180 are transmitted to decoding unit 200. The decoding unit comprises a decoder 220 for decoding the video information and a film grain simulator 240. The film grain simulator 240 generates film grain in accordance with the received grain parameters and adds the generated film grain to the decoded video information. In this manner, a decoded stream of video data with film grain overlaid thereon can be reproduced.

It is a disadvantage of this approach that the film grain information has to be standardised in accordance with a known statistical film grain model in order to obtain respective parameters. Thus, only film grain fitting into the standardised statistical film grain model can be appropriately encoded and transmitted for true decoding and reproduction thereof.

Up to now, no specific technique has been standardized to compress film grain differently from other high frequency information, such as texture or contours. Consequently, it is not yet possible to efficiently encode cinema movies containing film grain.

Accordingly, it is an object of the present invention to provide an improved method and apparatus for encoding and decoding video data including film grain information.

This is achieved by the subject matter of the independent claims.

Preferred embodiments are the subject matter of dependent claims.

According to a first aspect of the present invention, a method for encoding video data of at least one image containing film grain information in addition to video information is provided. The method comprises the steps of removing film grain information from the image, dividing the image into a plurality of blocks and encoding each of the blocks. Further, the film grain information is extracted and at least one block of film grain information is encoded.

According to a further aspect of the present invention, an encoding apparatus for encoding video data of at least one image containing film grain information in addition to video information is provided. The encoding apparatus comprises a film grain filter for removing film grain information, a video encoder for dividing the image into a plurality of blocks and encoding each of the blocks. Further, the encoding apparatus comprises a film grain filter for extracting the film grain information and a film grain encoder for encoding at least one block of film grain information.

According to another aspect of the present invention, a method for decoding video data of at least one image which has been encoded in form of blocks and wherein the image containing film grain information in addition to video information is provided. The method comprises a step of decoding the blocks of encoded video data. Further, the method comprises the steps of decoding at least one block of encoded film grain information and adding the decoded block of film grain information to the decoded blocks of encoded video data.

According to another aspect of the present invention, a decoding apparatus for decoding encoded video data of at least one image which has been encoded in form of blocks and which contains film grain information in addition to video information is provided. The decoding apparatus comprises a video decoding unit for decoding the blocks of encoded video data. Further, the decoding apparatus comprises a film grain decoding unit for decoding at least one block of encoded film grain information and an adder for adding the decoded blocks of film grain information to the decoded blocks of video data.

It is the particular approach of the present invention to extract the film grain information from the received video input signal. The extracted film grain information is subjected to a standardised video coding scheme. Thus, the grain encoding is not restricted to a specific film grain model or to any standardised approximation thereof.

An important aspect of the present invention is that the film grain information is encoded for a single block of film grain information only. Thus, the encoded film grain information needs only to be transmitted once for each image or image sequence. The film grain information can thus be encoded with high accuracy without considerably increasing at the same time the amount of data to be transmitted.

When only transmitting a single block of encoded film grain information, the decoder decoding a received encoded stream of video data applies the decoded block of film grain information to each new decoded block of video information. The same block of decoded film grain information is consequently employed in a repetitive manner at the decoder side.

It is a further advantage of the present invention that no specific computation means is required for determining any kind of parameterization. As standard encoding techniques are employed in accordance with the present invention to encode the extracted film grain information, the configuration of video encoders and decoders is simplified and the required additional computation effort reduced.

Preferably, the present invention encodes a video sequence consisting of a plurality of consecutive images. A block of encoded film grain information needs only to be transmitted for a small number of blocks, smaller than the total number of blocks of encoded video data. In this manner, the required transmission bandwidth is only slightly increased due to the film grain information.

Preferably, only a predetermined number of film grain blocks is encoded, for instance less than 10 blocks, in particular only a single block of film grain information. This approach enables to only employ a minimum effort for encoding and transmitting film grain information, and the film grain can be reproduced with high accuracy at a decoder side.

According to another preferred embodiment, a single block of film grain information is encoded for each image of an image sequence. A repeated encoding and transmission of at least one block of film grain information in intervals of equal or unequal length enables the coding system to even cope with abrupt changes of the film grain structure which can be truly reproduced at a decoder side.

According to another preferred embodiment, statistical properties of the encoded video signal are monitored. As soon as one or more of the statistical properties exceed a predetermined value or a predetermined amount of change, a further block of film grain information is encoded. This approach enables an adaptive encoding of the film grain information. A new block of film grain information is only encoded when a change in the film grain structure can be perceived by a viewer at the decoder side. Thus, the film grain information can be reproduced with high quality and a minimum amount of additional data to be transmitted.

By storing a decoded block of film grain information at the decoder side, the decoded information can be applied in a repetitive manner to any subsequent block of encoded video information.

According to a preferred embodiment, the decoded block of film grain information is applied to subsequent blocks of decoded video data in a modified manner. Any regular appearance of the generated film grain pattern at the decoder side is thus avoided and an irregular structure approximating that of Fig. 1 can be achieved in a simple manner. Preferably, the decoded film grain information is modified in accordance with one or a plurality of different possible modifications.

According to one preferred modification, the decoded block of film grain information is mirrored before being superimposed on a block of decoded video data. Preferably, the film grain block is mirrored by applying a vertical, horizontal and/or diagonal mirror axis. Thus, an irregular film grain pattern can be generated in a simple manner.

According to another preferred modification, a block of film grain information is rotated before being added to an encoded block of video data. A rotation avoids in a simple manner the generation of a regular film grain pattern which might be recognised by a viewer.

Further, the decoded film grain blocks can be varied with respect to intensity before being added to a decoded block of video information. In this manner, the perceivable film grain structure will vary over the entire image and result in a more natural appearance of the generated film grain.

According to another preferred embodiment, the film grain information of a decoded block of film grain is cyclically shifted within the block. By differently shifting the film grain information to be applied to neighbouring blocks of video data, a regular impression of film grain can be avoided and a more natural appearance is achieved.

The above mentioned approaches for modifying the decoded block of film grain information can be combined by selecting any possible sub-combinations thereof in order to create more sophisticated modifications of the decoded film grain block. Preferably, each of the individual modification is applied with a varied degree to subsequent video blocks. By selecting any combination or sub-combination of different of the modification types together with a respective degree thereof in a random or a random-like manner, a most natural-like appearance of the reproduced grain structure can be achieved. While natural impression of film grain at a decoding side can be achieved, the effort for the encoding and transmission of film grain data is at the same time reduced to a minimum amount.

The above and other objects and features of the present invention will become apparent from the following description and preferred embodiments given in conjunction with the accompanying drawings, in which:

Fig. 1 illustrates an enlarged example of film grain structure;

Fig. 2 schematically illustrates in block diagram form a conventional encoder and a conventional decoder for parameterization of film grain information;

Fig. 3 schematically illustrates in block diagram form the configuration of an encoder and of a decoder in accordance with the present invention;

Fig. 4 illustrates the process of overlaying a decoded film grain block on a decoded block of video information;

Fig. 5 illustrates examples of different modifications of a single block of film grain information by mirroring and/or rotating;

Fig. 6 schematically illustrates a cyclic shifting of a decoded film grain pattern in horizontal direction;

Fig. 7 is a flow chart illustrating the process of encoding motion pictures with film grain; and

Fig. 8    is a flow chart illustrating the process of decoding encoded video data and film grain data in order to generate a decoded stream of video data with film grain.

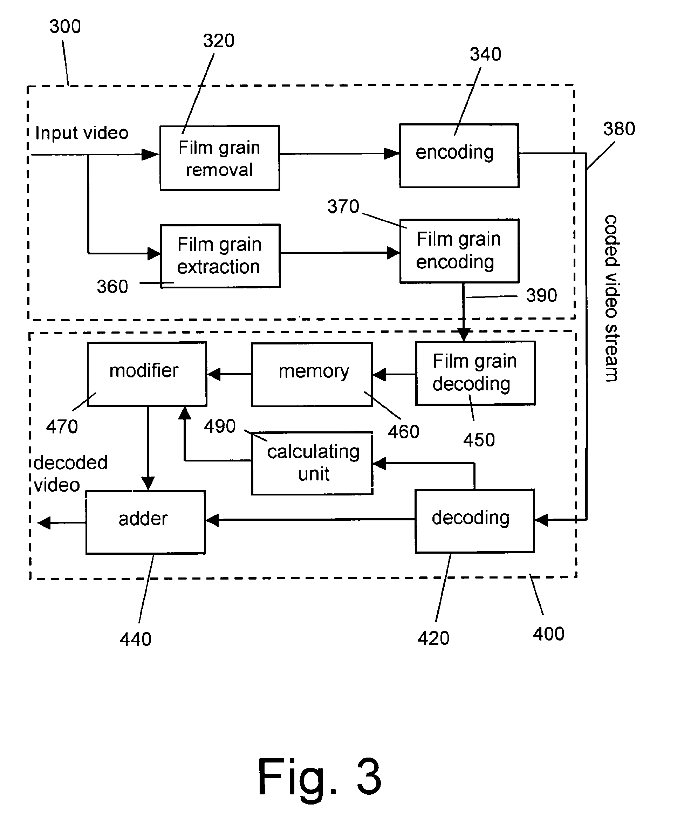

Referring to Fig. 3, an encoder 300 and a decoder 400 for encoding and decoding video data including film grain information are schematically illustrated. An input video signal comprising video data and film grain information is input to encoder 300. For compressing the input video data, encoder 300 comprises a film grain removal filter 320, a video encoding unit 340, a film grain extraction filter 360, and a film grain encoding unit 370.

During operation, the input video signal is applied to the film grain removal filter 320 and the film grain extraction filter 360. The film grain removal filter 320 removes film grain information from the video data and supplies the extracted video data to video encoding unit 340. Video encoding unit 340 compresses the received video data in accordance with a standardized encoding procedure. The coded video stream 380 is transferred to decoder 400.

While the film grain removal filter 220 removes film grain information from the input video, film grain extraction filter 360 extracts the film grain information therefrom, i.e. removes the video data from the input video stream. The extracted film grain information is supplied to film grain encoding unit 370 for encoding the film grain information in accordance with a standardized video encoding format. The one or more encoded blocks of film grain information 360 are applied to decoder 400.

Although video encoding unit 340 and film grain encoding unit 370 are described here as separate units, the computational task of encoding video and film grain data in a standardized manner can be accomplished by employing a single encoding unit in time division multiplex manner. It is one of the important differences of encoding video data and encoding film grain information that the film grain information is encoded with a higher resolution in order to preserve the fine film grain structures while the video data encoding is carried out such that only a lower level of spatial high frequency components is maintained in the blocks, i.e. the encoding (in particular the quantization step thereof) is performed with larger quantization steps.

Both separate encoding procedures, namely the video encoding performed by video encoding unit 340 and the film grain encoding performed by film grain encoding unit 370, are carried out on a block basis. Preferably, such blocks consists of 8x8 or 16x16 pixels. In order to reduce the computational effort required for encoding film grain information, only a minimum number of blocks of film grain information is encoded and supplied to decoder 400. A minimum amount of additional computation effort for a film grain encoding is achieved by only transmitting a single film grain block for an entire input video sequence. Alternatively, new encoded blocks of film grain information may be transmitted either periodically in predetermined intervals, for instance each time when a predetermined number of images has been encoded.

Further, a predetermined number of film grain blocks for each video sequence can be transmitted by equally distributing the intervals over the entire video sequence. According to another approach, a single block of film grain information is transmitted for each of the images. The different approaches enables to adapt the film grain information reproduced at the decoder side to variations of the film grain information in the input video signal. Particularly, the encoding and transmission of a block of film grain information can be made dependent on certain local statistical parameters of the input signal (e.g. expectation values, correlations, variances, etc.). For this purpose, the statistical parameters of the encoded video signal 380 or the encoded film grain signal 390 are monitored and evaluated.

The statistical parameters can be used to determine whether a characteristic of the film grain structure in the input video signal changed. For this purpose, the input video signal is preferably evaluated with respect to one or more of the statistical input signal parameters like spatial correlation, variance or other expectation values.

These parameters can be used to characterise the film grain signal included in the video input signal. Upon recognizing a significant change of one or more of the statistical parameters, a change of the underlying film grain structure is detected and a new block for representing the change in the film grain is transmitted.

The coded video streams 380 and the block(s) of encoded film grain information 390 are supplied to decoder 400. The encoded data are either obtained from a transmission channel or from a recording medium storing the coded video stream together with the encoded film grain information. Decoder 400 comprises a video decoding unit 420, a film grain decoding unit 450, a memory 460, a modifier 470, a calculation unit 490 and an adder 440.

During operation, the encoded video data are applied to video decoding unit 420. Video decoding unit 420 processes the received encoded data in accordance with the respective video coding standard and reproduces the decoded video data, i.e. a plurality of subsequent video blocks.

The encoded film grain information is applied to film grain decoding unit 450 . Film grain decoding unit 450 processes the received encoded data in accordance with the applied video coding standard in order to obtain a block of decoded film grain information. Although, the film grain decoding unit 450 and the video decoding unit 420 are described as separate units of decoder 400, both processing units 420, 450 may be implemented as a single decoding unit decoding the different kinds of image information in time division multiplex manner.

In order to apply a single decoded block of film grain information to a plurality of decoded video blocks, the decoded block of film grain information is stored in memory 460 and applied to adder 440 in a repetitive manner. Adder 440 adds a block of film grain information to each decoded video block. In this manner, the input video signal is reproduced at the decoder side wherein the original film grain information is approximated based on a single block (or small number of blocks) of original film grain information obtained from the input video signal.

In order to avoid any artefacts or regular structure of the reproduced film grain information, decoder 400 comprises in a preferred embodiment a modifier 470. Modifier 470 receives the block of film grain information to be applied to adder 440 and modifies the film grain data in a predefined manner. By applying modified blocks of film grain information to subsequent blocks of video information, a regular film grain pattern perceivable by a viewer can be prevented. The modifications are performed in accordance with a predetermined rule. Alternatively, the modifications are carried out in a random manner or a pseudo random manner, i.e. by a sequence of instructions generated in a random manner.

The skilled person will be aware that there are plurality of known modifications which might be applied to a two-dimensional block of image information. Some of the most convenient modifications for use with a decoder 400 of the present invention will be described in the following.

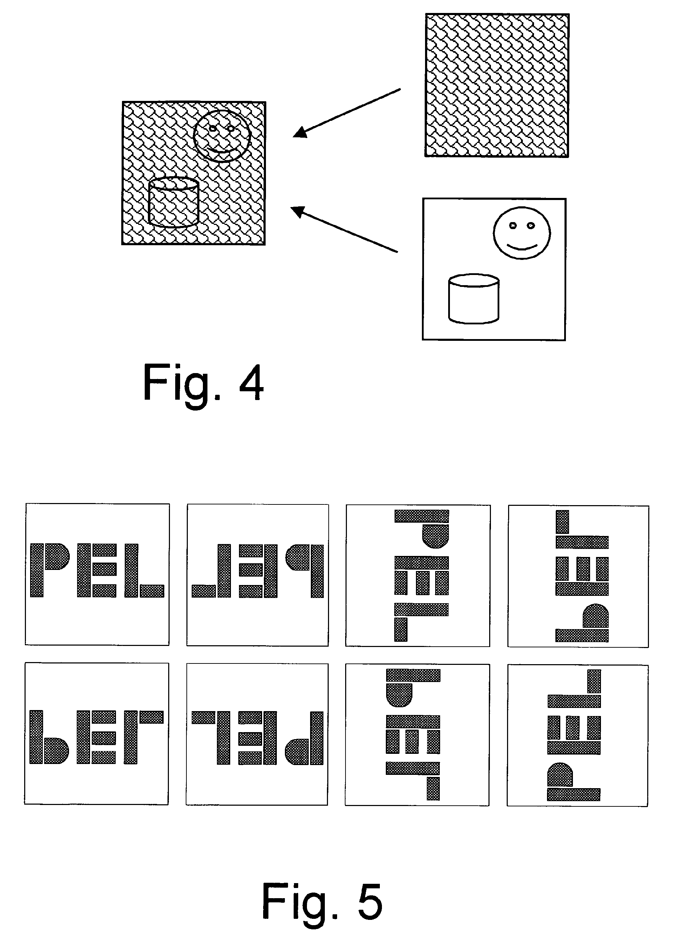

An example of adding an obtained and modified block of film grain structure to a decoded block of video data is illustrated in Fig. 4.

A first possible modification which might be applied to a block of film grain information is to mirror the block and apply the mirrored video block to adder 440. By applying differently mirrored film grain blocks, any regular appearance of film grain can be avoided. For this purpose, different kinds of mirror axis can be selected, a vertical axis, a horizontal axis and/or a diagonal axis.

A further approach for modifying a fixed block of film grain data is a rotation of the image information. The rotation can be applied in accordance with different rotation degrees. Preferably a degree of 90°, 180° and 270° is used for this purpose. The rotation can be combined with the mirroring operation. Examples for mirroring and/or rotating a block of two-dimensional data is shown in Fig. 5. In order to facilitate the recognition of the individually applied modification in Fig. 5, the letters "PEL" are used as the block information to be modified instead of a film grain pattern.

Another modification method is the change of the film grain block's intensity. By slightly varying the intensity of the grain block data, an original appearance of the grain block structure of the entire image can be approximated. For this purpose, preferably each block of film grain information is multiplied by a predefined intensity value. This modification is expressed by the following equation:

$$grain_{mod}\ (x,\ y) = a \cdot grain_{ori}\ (x,\ y)$$

In this equation, the sequence of the modified grain blocks $grain_{mod}$ (x, y) is calculated by multiplying the original grain block $grain_{ori}$ (x, y) by intensity value $a$. The intensity value $a$ is either calculated in advance or varied in a random or pseudo random manner. Alternatively, the intensity value a depends on local statistics obtained from the decoded image signal.

The film grain characteristic may change, for instance, with respect to the local brightness in the image. Accordingly, the generated grain structure can be modified by varying the intensity value of the grain depending on the mean brightness value of the image signal. In this manner, other parameters of the decoded images signal can employed.

In another alternative approach for varying the film grain block's intensity, a matrix of intensity coefficients is multiplied with respective pixel values of the film grain block. An individual intensity matrix is provided for each block of grain information. The matrix' coefficients can be varied in accordance with a predetermined rule, or in accordance with a predetermined sequence of matrixes. The individual matrixes of a pre-stored sequence of matrixes are applied in a random or a pseudo random manner. Individual matrixes can also be selected or varied based on the local statistics of the decoded image signal.

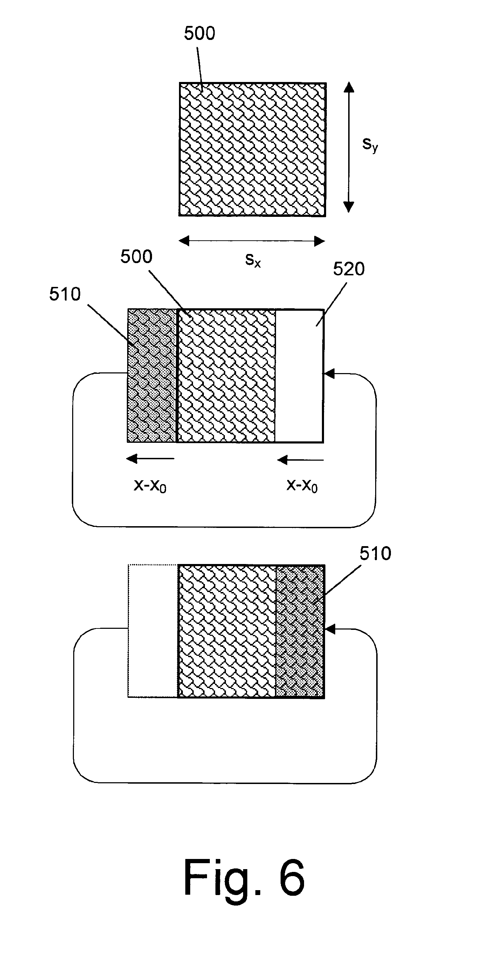

A further possible approach for modifying a block of film grain information is to apply a cyclic shift to the image information of one block. The portion of the film grain information shifted to the outside of the block is inserted again on the other end of the block. This modification is schematically illustrated for a horizontal shift in Fig. 6. The film grain structure of block 500 which has size of $S_x$, $S_y$ is shifted in horizontal direction to the left. The grain pattern of block 500 is shifted by predetermined amount defined by the expression $x-x_0$ wherein $x_0$ represents a predefined or random value. Due to the shift, a block portion 510 is shifted to the external of the block frame 500. At the same time, a part of the film grain structure of block 500 is removed from part 520 of the block. The cyclic shift is accomplished by inserting block portion 510 at the internal block position 520. In this manner, any amount of shift, either in horizontal and/or vertical direction, can be implemented.

The cycle shift operation can be carried out in accordance with the following equation:

$$grain_{mod}\ (x,\ y) =\ grain_{ori}\ (\ (x - x_0)\ \%s_{x,}\ (y - y_0)\ \%\ s_y\ )$$

By employing random variables $x_0$ and $y_0$, the shift amount may take any value between $+S_x$, $-S_x$ and $+S_y$, $-S_y$ wherein $S_x$, $S_y$ represent the size of the film grain block, (for instance, $S_x = S_y = 16$). The sign "%" indicates a modulo operation to be applied which returns the reminder part of a division by the "modulus", namely as $s_x$ or $s_y$.

It will be appreciated by a skilled person, that any of these modifications may be applied individually or in combination with another modification. By combining different kinds for modifying the block information, a natural impression of the generated film grain structure can be approximated.

According to a preferred embodiment, the modification types and degrees are selected depending on local statistic of the decoded image signal. The decoded image signal is monitored and evaluated by calculation unit 490 in order to determine appropriate control signals for modifier 470.

According to a particular approach, the data to be encoded or statistical parameters of the encoding process are monitored at the encoder side and the modification parameters to be applied at the decoder side are additionally transmitted to the decoder as supplemental information. Based on such information, the decoder can apply the best modification to achieve a best approximation of the original film grain structure. As not all decoders may provide identical types for modifying a grain block, the information provided by the encoder may include a priority list indicating which modification is to be applied first, second, etc.

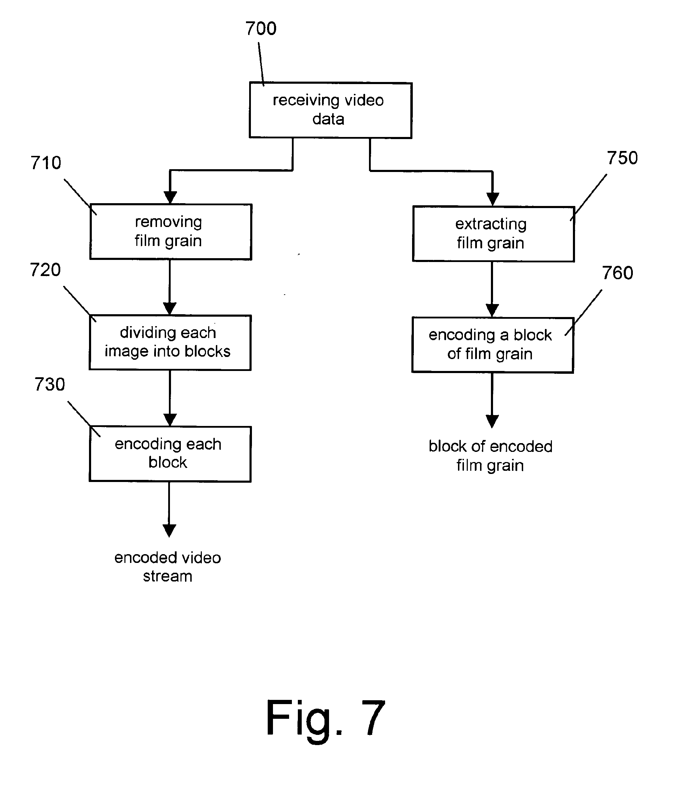

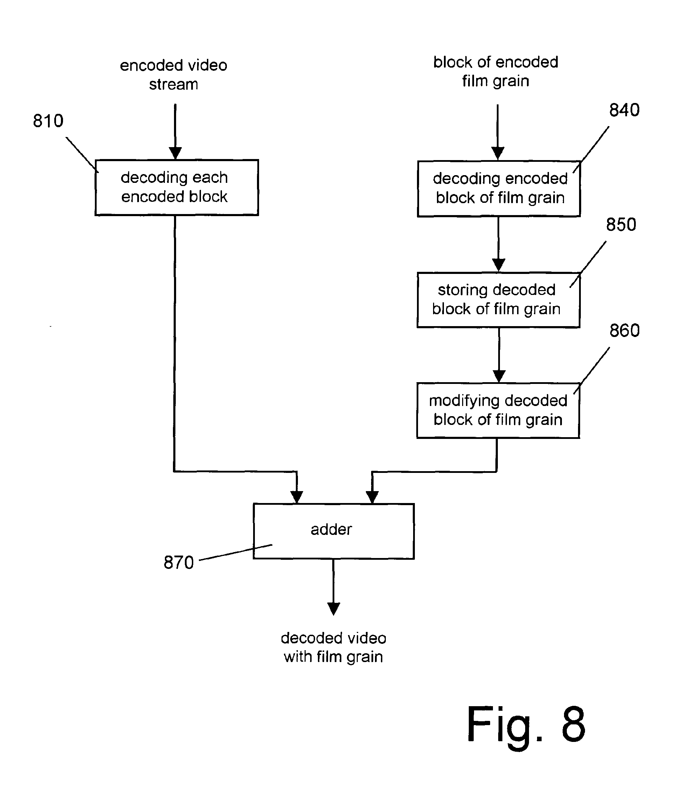

Referring to the flow charts of Fig. 7 and Fig. 8, a method for encoding and decoding motion pictures with film grain information is described. As shown in Fig. 7, motion picture data including film grain information is received in step 700. A further processing of video data and film grain information is performed in separate branches.

The video data is processed in the first processing branch comprising steps 710, 720, 730 while the film grain information is processed in the processing branch comprising steps 750 and 760. The received motion picture data are subjected to a film grain filter 710 removing film grain information from the video data. An image of extracted video data is divided into a plurality of a blocks in step 720. Each block preferably corresponds to the "macro blocks" of the MPEG video standards, consisting of 16x16 pixels. The blocks are encoded in accordance with the selected video coding standard (step 730) and the encoded stream of video data is output.

A decoding procedure for decoding the encoded data obtained from the encoding method described in Fig. 7 will now be described with reference to the flow chart of Fig. 8. Again, the video data and the film grain information are processed in separate branches. The encoded stream of video data is decoded in step 810 on a block basis. The received encoded block of film grain information is decoded in step 840 in order to obtain a single block of film grain information. The obtained block of film grain information is stored (step 850) and, preferably, applied to the subsequent adding step 870 in modified form (step 860). The adding step superimposes the modified block of film grain information to the decoded block of video data (step 870).

Summarising, the present invention separately processes film grain information and video data wherein only a smaller number of blocks of film grain data is encoded/decoded compared to the number of encoded/decoded blocks of video data. By adding an obtained block of film grain information at the decoder side to a plurality of decoded blocks of video data, an efficient and natural reproduction of film grain is enabled with low computational effort.

**Claims**

**1.** A method for encoding video data of at least one image, said image containing film grain information in addition to video information, said method comprising the steps of:

    removing (710) the film grain information from said image,

    dividing (720) the image into a plurality of blocks, and

    encoding (730) each of the blocks

    **characterized by**
    extracting (750) said film grain information, and
    encoding (760) at least one block of film grain information.

**2.** A method according to claim 1, encoding a video sequence consisting of a plurality of consecutive images.

**3.** A method according to claim 1 or 2, wherein said encoding step (760) encoding film grain information for a number of blocks smaller than the total number of blocks of the encoded video data.

**4.** A method according to claim 3, wherein said number of encoded blocks of film grain information being a predetermined number.

**5.** A method according to claim 4, wherein said number of encoded blocks of film grain information smaller than 10, preferably a single block.

**6.** A method according to claim 1 or 2, wherein said encoding step (760) encoding a single block of film grain information for each image of said video data.

**7.** A method according to claim 1 or 2, further comprising the steps of:

determining a predetermined statistical property of the encoded images or sequence of images, and

encoding (760) a further block of film grain information if said determined statistical property exceeding a predetermined value or a predetermined amount of change.

**8.** An encoding apparatus for encoding video data of at least one image, said image containing film grain information in addition to video information, comprising:

a film grain filter (320) for removing the film grain information,

a video encoder (340) for dividing the image into a plurality of blocks and encoding each of said blocks,

**characterized by**
a film grain filter (360) for extracting the film grain information, and
a film grain encoder (370) for encoding at least one block of film grain information.

**9.** An encoding apparatus according to claim 8, wherein said video encoder (340) encoding a video sequence consisting of a plurality of consecutive images.

**10.** An encoding apparatus according to claim 8 or 9, wherein said film grain encoder (370) encoding said film grain information for a number of blocks smaller than the total number of blocks of the encoded video data.

**11.** An encoding apparatus according to claim 10, wherein said number of encoded blocks of film grain information being a predetermined number.

**12.** An encoding apparatus according to claim 10, wherein said number of encoded blocks of film grain information being smaller than 10, preferably a single block.

**13.** An encoding apparatus according to claim 8 or 9, wherein said film grain encoder (370) encoding a single block of film grain information for each image of said video data.

**14.** An encoding apparatus according to claim 8 or 9, further comprising a calculation unit for determining a predetermined statistical property of the image or sequence of images encoded by said video encoder (340), wherein said film grain encoder (370) encoding a further block of film grain information if said predetermined statistical property exceeding a predetermined value or a predetermined amount of change.

**15.** A method for decoding video data of at least one image which has been encoded in form of blocks, said image containing film grain information in addition to video information, said method comprising the step of decoding (810) said blocks of encoded video data
**characterized by** the steps of
decoding (840) at least one block of encoded film grain information, and
adding (870) said decoded block of film grain information to said decoded blocks of encoded video data.

**16.** A method according to claim 15, decoding an encoded video sequence consisting of a plurality of consecutive images.

17. A method according to claim 15 or 16, wherein said step of decoding (840) film grain information decodes a number of blocks of encoded film grain information smaller than the total number of decoded blocks of the encoded video data.

18. A method according to claim 17, wherein said number of decoded blocks of film grain information being a predetermined number.

19. A method according to claim 17, wherein said number of decoded blocks of film grain information being smaller than 10, preferably a single block.

20. A method according to claim 15 or 16, wherein said step of decoding (840) film grain information decodes a single block of film grain information for each image.

21. A method according to any of claims 16 to 20, further comprising the step of storing (850) said decoded block of film grain information.

22. A method according to any of claims 16 to 21, further comprising the step of modifying (860) said decoded block of film grain information before adding said block of film grain information to a decoded block of video data.

23. A method according to claim 22, wherein said step of modifying (860) the decoded block of film grain information mirrors the decoded block of film grain information.

24. A method according to claim 23, wherein said modifying step (860) applying a vertical, horizontal and/or diagonal mirror axis.

25. A method according to claim 24, wherein said mirror axis being selected in a random manner or pseudo random manner for consecutive blocks of decoded video data.

26. A method according to any of claims 22 to 25, wherein said step of modifying (860) said decoded block of film grain information rotates the decoded block of film grain information.

27. A method according to claim 26, wherein a rotation degree being selected in a random manner or pseudo random manner for consecutive blocks of decoded video data.

28. A method according to any of claims 22 to 27, wherein said step of modifying (860) said decoded block of film grain information varies the intensity of the decoded block of film grain information.

29. A method according to claim 28, wherein an intensity selected for a film grain block being selected depending on local statistics of the decoded image signal.

30. A method according to any of claims 22 to 29, wherein said step of modifying (860) said decoded block of film grain information cyclically shifting the decoded film grain information within said decoded block.

31. A method according to claim 30, wherein a degree and direction for shifting the decoded film grain block being selected in a random manner or pseudo random manner for consecutive blocks of video data.

32. A decoding apparatus for decoding encoded video data of at least one image which has been encoded in form of blocks, said image containing film grain information in addition to video information, said decoding apparatus comprising
a video decoding unit (420) for decoding said blocks of encoded video data
**characterized by**
a film grain decoding unit (450) for decoding at least one block of encoded film grain information, and
an adder (440) for adding said decoded block of film grain information to said decoded blocks of video data.

33. A decoding apparatus according to claim 32, wherein said video decoding unit (420) decoding an encoded video sequence consisting of a plurality of consecutive images.

**34.** A decoding apparatus according to claim 32 or 33, wherein said film grain decoding unit (450) decoding a number of blocks of encoded film grain information smaller than the total number of decoded blocks of the encoded video data.

**35.** A decoding apparatus according to claim 34, wherein said number of decoded blocks of film grain information being a predetermined number.

**36.** A decoding apparatus according to claim 34, wherein said number of decoded blocks of film grain information being smaller than 10, preferably a single block.

**37.** A decoding apparatus according to claim 32 or 33, wherein said film grain decoding unit (450) decodes a single block of film grain information for each image.

**38.** A decoding apparatus according to any of claims 32 to 37, further comprising a memory (460) for storing said decoded block of film grain information.

**39.** A decoding apparatus according to any of claims 32 to 38, further comprising a modifier (470) for modifying said decoded block of film grain information before applying said block to said adder (440).

**40.** A decoding apparatus according to claim 39, wherein said modifier (470) mirrors said decoded block of film grain information.

**41.** A decoding apparatus according to claim 40, wherein said modifier (470) applying a vertical, horizontal and/or diagonal mirror axis.

**42.** A decoding apparatus according to claim 41, wherein said modifier (470) selecting a mirror axis in a random manner or pseudo random manner for consecutive blocks of video data.

**43.** A decoding apparatus according to any of claims 39 to 42, wherein said modifier (470) rotates said decoded block of film grain information.

**44.** A decoding apparatus according to claim 43, wherein said modifier (470) selecting a rotation degree in a random manner or pseudo random manner for consecutive blocks of video data.

**45.** A decoding apparatus according to any of claims 39 to 44 wherein said modifier (470) varying the intensity of the decoded block of film grain information.

**46.** A decoding apparatus according to claim 45, wherein said modifier (470) selecting an intensity for the film grain block depending on local statistics of the decoded image signal.

**47.** A decoding apparatus according to any of claims 39 to 46, wherein said modifier (470) cyclically shifting the decoded film grain information within said decoded block.

**48.** A decoding apparatus according to claim 47 wherein said modifier (470) selecting a degree and direction for shifting the decoded film grain block in a random manner or pseudo random manner for consecutive blocks of video data.

Fig. 1

Fig. 2

Fig. 3

Fig. 4

Fig. 5

Fig. 6

700

receiving video
data

710

removing
film grain

750

extracting
film grain

720

dividing each
image into blocks

760

encoding a block
of film grain

730

encoding each
block

block of encoded
film grain

encoded video
stream

# Fig. 7

encoded video
stream

block of encoded
film grain

810

840

decoding each
encoded block

decoding encoded
block of film grain

850

storing decoded
block of film grain

860

modifying decoded
block of film grain

adder

870

decoded video
with film grain

# Fig. 8

## EUROPEAN SEARCH REPORT

**European Patent Office**

| Application Number |
| --- |
| EP 03 01 9872 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
| --- | --- | --- | --- |
| X | EP 0 823 691 A (AGFA GEVAERT NV) 11 February 1998 (1998-02-11)<br><br>* page 5, line 4 - page 6, line 2 *<br>* page 7, line 36 - page 11, line 9 *<br>* figure 2 * | 1-6, 8-13, 15-21, 32-38 | H04N7/26 |
| A | | 7,14, 22-31, 39-48 | |
| X | WO 01/77871 A (DEMOGRAFX ;DEMOS GARY E (US)) 18 October 2001 (2001-10-18)<br><br>* page 19, line 20 - page 25, line 5 *<br>* page 30, line 9 - line 19 *<br>* page 40, line 1 - page 41, line 10 * | 1-3, 7-10, 14-17, 21-34, 38-48 | |
| A | | 4-6, 11-13, 18-20, 35-37 | **TECHNICAL FIELDS SEARCHED (Int.Cl.7)**<br>H04N<br>G06T |
| A | CHEE Y-K: "SURVEY OF PROGRESSIVE IMAGE TRANSMISSION METHODS" INTERNATIONAL JOURNAL OF IMAGING SYSTEMS AND TECHNOLOGY, WILEY AND SONS, NEW YORK, US, vol. 10, no. 1, 1999, pages 3-19, XP000805935 ISSN: 0899-9457<br>* page 14 - page 16, paragraph VI.B *<br>* figures 13,14 * | 1-48 | |

-/--

The present search report has been drawn up for all claims

| Place of search | Date of completion of the search | Examiner |
| --- | --- | --- |
| The Hague | 19 April 2004 | Lombardi, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

**Application Number**

EP 03 01 9872

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | TUDOR P N: "TUTORIAL MPEG-2 VIDEO COMPRESSION" ELECTRONICS AND COMMUNICATION ENGINEERING JOURNAL, INSTITUTION OF ELECTRICAL ENGINEERS, LONDON, GB, vol. 7, no. 6, 1 December 1995 (1995-12-01), pages 257-264, XP000545121 ISSN: 0954-0695 * figure 5 * | 1-48 | |
| A | US 2002/006161 A1 (RADHA HAYDER ET AL) 17 January 2002 (2002-01-17) * paragraph '0028! - paragraph '0035! * | 1-48 | |
| A | EP 0 779 742 A (RCA THOMSON LICENSING CORP) 18 June 1997 (1997-06-18) * page 3, line 28 - page 7, line 37 * * figure 2 * | 1-48 | |
| A | EP 0 905 982 A (CANON KK) 31 March 1999 (1999-03-31) * paragraph '0076! - paragraph '0081! * * paragraph '0093! - paragraph '0094! * * paragraph '0161! - paragraph '0281! * * figures 5,6 * | 1-48 | TECHNICAL FIELDS SEARCHED (Int.Cl.7) |
| A | US 5 588 075 A (CHIBA HIROTAKA ET AL) 24 December 1996 (1996-12-24) * column 11, line 27 - column 13, line 55 * * figures 11-13 * | 1-48 | |
| A | EP 1 215 624 A (EASTMAN KODAK CO) 19 June 2002 (2002-06-19) * paragraphs '0021! - '0025!, '0032! - '0035! * | 1-48 | |

-/--

The present search report has been drawn up for all claims

| Place of search | Date of completion of the search | Examiner |
|---|---|---|
| The Hague | 19 April 2004 | Lombardi, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | **European Patent Office** | **EUROPEAN SEARCH REPORT** | | Application Number |
|---|---|---|---|---|
| | | | | EP 03 01 9872 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2002/034337 A1 (SHEKTER JONATHAN MARTIN) 21 March 2002 (2002-03-21) * the whole document * | 1-48 | |
| | | | **TECHNICAL FIELDS SEARCHED** (Int.Cl.7) |

The present search report has been drawn up for all claims

| Place of search | Date of completion of the search | Examiner |
|---|---|---|
| The Hague | 19 April 2004 | Lombardi, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent

Office

**Application Number**

EP 03 01 9872

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**LACK OF UNITY OF INVENTION**
**SHEET B**

The Search Division considers that the present European patent application does not comply with the requirements of unity of invention and relates to several inventions or groups of inventions, namely:

```
1. claims: 1-6,8-13,15-21,32-38

        Method for encoding film grain information by encoding a
        number of blocks smaller than the total number of blocks
        used to encode the video data, which has the film grain
        information removed.
        ---


2. claims: 1,7,8,14

        Method for encoding film grain information by encoding a
        block of film grain information, when a predetermined
        statistical property  of the encoded video data, which has
        the film grain information removed, exceeds a predetermined
        value or a predetermined amount of change.
        ---


3. claims: 15,22-32,39-48

        Method for decoding film grain information including
        modifying the decoded film grain information before adding
        it to the decoded video data, which has the film grain
        information removed.
        ---
```

**ANNEX TO THE EUROPEAN SEARCH REPORT
ON EUROPEAN PATENT APPLICATION NO.**                    EP 03 01 9872

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2004

| Patent document cited in search report | | Publication date | Patent family member(s) | | Publication date |
|---|---|---|---|---|---|
| EP 0823691 | A | 11-02-1998 | EP | 0823691 A1 | 11-02-1998 |
| | | | DE | 69631126 D1 | 29-01-2004 |
| | | | JP | 10133309 A | 22-05-1998 |
| | | | US | 5832055 A | 03-11-1998 |
| WO 0177871 | A | 18-10-2001 | AU | 5138601 A | 23-10-2001 |
| | | | CA | 2406459 A1 | 18-10-2001 |
| | | | EP | 1279111 A1 | 29-01-2003 |
| | | | JP | 2003531514 T | 21-10-2003 |
| | | | WO | 0177871 A1 | 18-10-2001 |
| US 2002006161 | A1 | 17-01-2002 | WO | 0205541 A2 | 17-01-2002 |
| | | | US | 2002181580 A1 | 05-12-2002 |
| EP 0779742 | A | 18-06-1997 | US | 6285710 B1 | 04-09-2001 |
| | | | CN | 1155814 A ,B | 30-07-1997 |
| | | | DE | 69620984 D1 | 06-06-2002 |
| | | | DE | 69620984 T2 | 31-10-2002 |
| | | | EP | 0779742 A2 | 18-06-1997 |
| | | | ES | 2176417 T3 | 01-12-2002 |
| | | | JP | 9205652 A | 05-08-1997 |
| | | | RU | 2189700 C2 | 20-09-2002 |
| EP 0905982 | A | 31-03-1999 | FR | 2769454 A1 | 09-04-1999 |
| | | | EP | 0905982 A2 | 31-03-1999 |
| US 5588075 | A | 24-12-1996 | JP | 3447771 B2 | 16-09-2003 |
| | | | JP | 7075105 A | 17-03-1995 |
| EP 1215624 | A | 19-06-2002 | US | 2002106103 A1 | 08-08-2002 |
| | | | EP | 1215624 A2 | 19-06-2002 |
| | | | JP | 2002262066 A | 13-09-2002 |
| US 2002034337 | A1 | 21-03-2002 | CA | 2309002 A1 | 23-11-2001 |
| | | | CA | 2348325 A1 | 23-11-2001 |

EPO FORM P0459

For more details about this annex : see Official Journal of the European Patent Office, No. 12/82